# FASCICULE DE BREVET EUROPEEN

(11) **EP 2 717 230 B1**
(45) Date de publication et mention de la délivrance du brevet: **26.09.2018**
(21) Numéro de dépôt: 13186861.4
(22) Date de dépôt: 01.10.2013
(51) Int. Cl.: G06T 19/00

(54) **Système de visualisation pour aéronef pour l'affichage de lignes de relief et procédé associé**
Visualisierungssystem für Flugzeuge zum Anzeigen von Relieflinien und entsprechendes Verfahren
Visualization system for aircraft for displaying ridgelines and corresponding method

(30) Priorité: 05.10.2012 FR 1202676
(43) Date de publication de la demande: 09.04.2014
(73) Titulaire: Dassault Aviation, 75008 Paris (FR)
(72) Inventeur: Baudson, Olivier, 75017 Paris (FR); Turpin, Arnaud, 92100 Boulogne (FR)
(74) Mandataire: Lavoix

(56) Documents cités:
- Corwin ET AL: "Synthetic Terrain Imagery for Helmet-Mounted Display. Volume 1.", , 15 novembre 1994 (1994-11-15), XP055064820, Extrait de l'Internet: URL:http://oai.dtic.mil/oai/oai?verb=getRe cord&metadataPrefix=html&identifier=ADA293 612 [extrait le 2013-05-31]
- MOLLER H ET AL: "Synthetic vision for enhancing poor visibility flight operations", IEEE AEROSPACE AND ELECTRONIC SYSTEMS MAGAZINE, IEEE SERVICE CENTER, PISCATAWAY, NJ, US, vol. 9, no. 3, mars 1994 (1994-03), pages 27-33, XP011414384, ISSN: 0885-8985, DOI: 10.1109/62.275379
- THEUNISSEN, ERIK; ETHERINGTON, TIM: "Computer graphics in the cockpit", INFORMATION DESIGN JOURNAL, 2002, XP008162595, ISSN: 0142-5471

## Description

La présente invention concerne un système de visualisation pour un aéronef.

Un tel système est connu par exemple de l'article de Corwin et al. « Synthetic Terrain Imagery for Helmet-Mounted Display ».

Un tel système est destiné à être implanté dans le cockpit d'un aéronef pour être associé à un afficheur du cockpit. L'afficheur est par exemple un afficheur au moins partiellement transparent, tel qu'un écran semi-transparent placé devant un pare-brise du cockpit, un système de projection d'images sur le pare-brise du cockpit, un pare-soleil semi-transparent, un viseur de casque, une lunette semi-transparente proche de l'oeil.

En variante, l'afficheur constitue un écran tête basse intégré dans le tableau de bord du cockpit.

Pour faciliter le pilotage de l'aéronef, et donner au pilote une indication globale sur la structure du terrain situé en regard de l'aéronef, il est connu de générer des images synthétiques du paysage situé à l'avant de l'aéronef, à partir notamment de bases de données topographiques, en fonction de la position courante de l'aéronef déterminée par le système de navigation de l'aéronef.

Les images synthétiques sont représentatives de l'environnement situé à l'avant de l'appareil, tel qu'il peut être observé à travers le pare-brise par un pilote dans le cockpit. Ces images synthétiques comprennent généralement une représentation synthétique surfacique du terrain.

Ces images remplissent sensiblement totalement l'écran.

Un tel système de visualisation permet au pilote de se représenter le relief qui peut se trouver devant l'aéronef, notamment lorsque la visibilité est faible ou nulle.

De tels systèmes de visualisation fournissent une aide substantielle au pilote, mais s'avèrent parfois imprécis, compte tenu des erreurs possibles dans le positionnement de l'aéronef, et/ou dans les données topographiques disponibles dans les bases de données. Il est donc nécessaire de disposer en parallèle d'une vision réelle de l'environnement se situant à l'extérieur de l'aéronef.

Pour ce faire, des systèmes de visualisation améliorée (« Enhanced Vision Systems ou « EVS » en anglais) ont été développés.

Ces systèmes comprennent généralement une caméra embarquée dans le nez de l'aéronef. La caméra, qui comporte par exemple des capteurs fonctionnant dans l'infrarouge, améliore la visibilité à l'avant de l'aéronef, en détectant le terrain et toutes les structures présentes sur le terrain comme par exemple des lumières présentes sur la piste ou autour de la piste, en particulier les éclairages des rampes d'approche.

Sur la base des données d'image collectées par la caméra, une image réelle de l'environnement présent à l'avant de l'aéronef est obtenue.

De tels systèmes de visualisation permettent donc de confirmer la position de la piste par rapport à l'aéronef et/ou par rapport à l'environnement, et facilitent la décision du pilote lorsqu'il atteint l'altitude de décision, à laquelle il doit choisir de poursuivre ou non l'atterrissage.

Des systèmes de visualisation hybrides ont par ailleurs été développés. Ces systèmes affichent à la fois une première région comprenant une image totalement synthétique, et une deuxième région comprenant une image réelle obtenue à partir d'un système de vision amélioré comprenant une caméra infrarouge.

Les systèmes de visualisation existants sont efficaces, mais présentent certains désavantages. Ainsi, lorsqu'une image synthétique occupe l'écran partiellement ou totalement, elle masque parfois les détails réels du terrain situé à l'arrière de l'image, notamment lorsque la visibilité à l'avant de l'aéronef est bonne.

De même, dans les dispositifs permettant l'affichage d'une image réelle, obtenue à partir d'une caméra, le type d'image obtenu peut être insuffisamment clair pour le pilote, et peut conduire à masquer certains détails importants pour celui-ci, notamment au niveau du relief.

Un but de l'invention est donc d'obtenir un système de visualisation qui améliore l'analyse du terrain présenté au pilote à travers le système, sans masquer de détail significatif du terrain.

A cet effet, l'invention a pour objet un système selon la revendication 1.

Le système selon l'invention peut comprendre l'une ou plusieurs des caractéristiques des revendications dépendantes 2 à 8.

L'invention a également pour objet un procédé selon la revendication 9.

L'invention sera mieux comprise à la lecture de la description qui va suivre, donnée uniquement à titre d'exemple, et faite en se référant aux dessins annexés, sur lesquels :
- la figure 1 est une vue schématique d'un système de visualisation d'un aéronef selon l'invention ;
- la figure 2 est une vue schématique d'un cockpit dans lequel le système de visualisation est mis en oeuvre ;
- la figure 3 est une vue d'un afficheur du système de la figure 1, dans une première configuration d'affichage dans laquelle des lignes de relief sont représentées, sans image intermédiaire entre les lignes ;
- la figure 4 est une vue analogue à la figure 3, dans une autre configuration d'affichage, dans laquelle des lignes de relief sont affichées, et une image réelle est affichée entre les lignes intermédiaires ;
- la figure 5 est une vue de l'aéronef dans une configuration d'évolution au dessus du terrain ;
- la figure 6 est une vue de dessus de l'aéronef lors de son évolution.

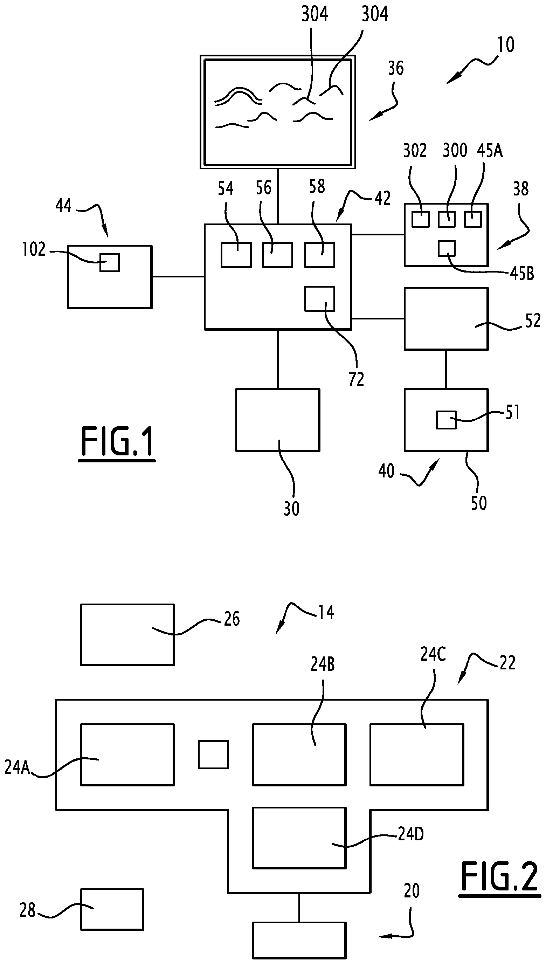

Un premier système 10 de visualisation pour un aéronef 12 selon l'invention est illustré schématiquement par la figure 1.

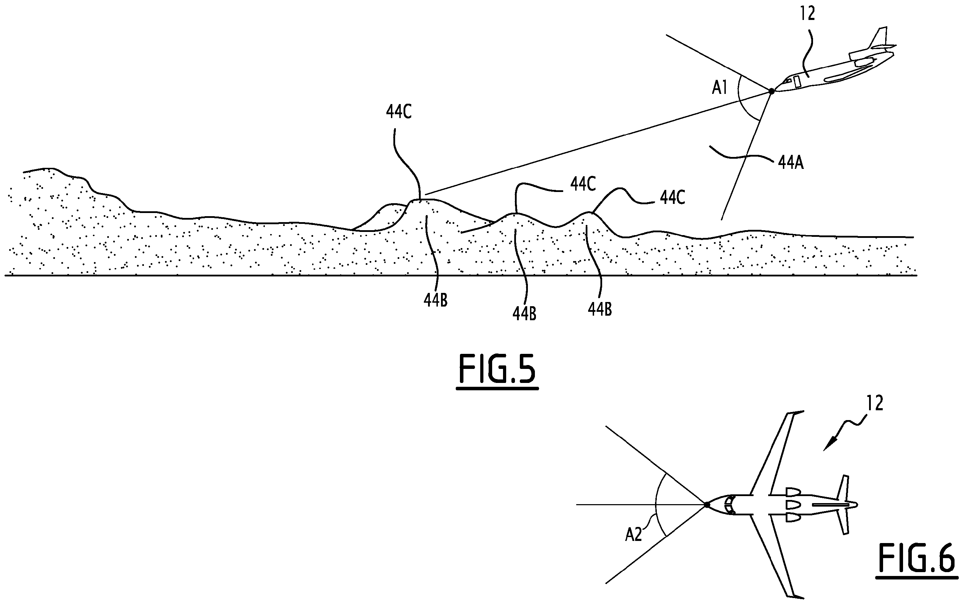

Ce système 10 est destiné à être monté dans un aéronef 12 visible schématiquement sur la figure 5, pour permettre l'affichage d'informations sur un afficheur présent dans le cockpit 14 de l'aéronef représenté schématiquement sur la figure 2.

Le système 10 est destiné à assister le pilote de l'aéronef pour se représenter le terrain 16 situé en regard de l'aéronef 12, en croisière, ou lors d'une phase d'approche, au voisinage d'une piste.

En référence à la figure 2, le cockpit 14 est muni d'un système principal d'affichage 22 raccordé à une unité centrale d'avionique 20.

Le système principal 22 permet à l'équipage de piloter l'aéronef, de gérer sa navigation, de surveiller et commander les différents systèmes fonctionnels présents dans l'aéronef. Le système 22 comporte une planche de bord munie d'une pluralité d'écrans de base 24A à 24D formant des afficheurs tête basse.

Dans cet exemple le cockpit 14 est aussi avantageusement muni d'un écran semi-transparent tête haute 26, placé en regard du pare-brise.

Le cockpit 14 est par ailleurs muni d'un organe de commande 28 du pilotage de l'aéronef, tel qu'une manette ou un manche.

De manière connue, les écrans de base 24A et 24C sont par exemple des écrans primaires d'affichage destinés à l'affichage de paramètres de vol de l'aéronef. Les écrans de base 24B et 24D sont par exemple des écrans multifonctionnels de navigation et/ou de suivi et de commande des systèmes d'avionique.

Le système d'affichage principal 22 est muni d'un ensemble de gestion d'affichage (non représenté) propre à afficher les différentes fenêtres présentes sur ces écrans 24A à 24D.

L'unité centrale d'avionique 20 est raccordée à un système 30 de mesure et de positionnement spatial de l'aéronef 12.

Le système 30 de mesure et de positionnement comporte par exemple des capteurs de mesure de paramètres extérieurs à l'aéronef tel que la température, la pression ou la vitesse, des capteurs de mesure de paramètres interne à l'aéronef et à ses différents systèmes fonctionnels, et des capteurs de positionnement, tel que des capteurs GPS , des centrales à inertie, ou/et un altimètre.

Les capteurs de positionnement sont propres à fournir une information sur la position géographique de l'aéronef, sur sa vitesse, son cap et son attitude (assiette longitudinale, angle de roulis).

En référence à la figure 1, le système de visualisation 10 selon l'invention est raccordé au système 30 de mesure et de positionnement.

Le système de visualisation 10 comporte au moins un afficheur 36, un ensemble 38 de génération d'un environnement synthétique, et avantageusement, un ensemble 40 de génération d'images réelles.

Il comporte également un ensemble 42 de gestion de l'interface graphique de l'afficheur 36 raccordé à chacun des ensembles 38, 40 et au système de positionnement 30.

Le système 10 comporte en outre une interface homme/machine 44 pour le réglage des paramètres de l'affichage sur l'afficheur 36.

L'afficheur 36 est par exemple un des écrans 24A à 24B ou/et est l'écran semi-transparent tête haute 26 du cockpit 14. Dans d'autres variantes, l'afficheur 36 est par exemple un système de projection d'images sur le pare-brise du cockpit, un pare-soleil semi-transparent, un viseur de casque ou une lunette semi-transparente proche de l'oeil.

Dans un premier mode de réalisation, qui sera décrit par la suite, l'afficheur 36 du système de visualisation 10 selon l'invention est l'écran semi-transparent tête haute 26 du cockpit 14.

Dans ce cas, l'afficheur 36 est propre à être rendu partiellement transparent pour autoriser la visualisation de l'environnement situé à l'avant de l'afficheur 36, par transparence. L'afficheur 36 est propre à être rendu au moins partiellement opaque par l'affichage d'un environnement synthétique ou d'images réelles générées par l'un des ensembles de génération 38, 40, et fournies par l'ensemble de gestion 42, comme cela sera décrit plus bas.

Les dimensions de l'afficheur 36 correspondent à un volume d'observation 44A dans l'espace situé à l'avant de l'aéronef 12, défini sensiblement par une pyramide. En référence à la figure 5 et à la figure 6, le volume d'observation 44A présente un angle d'ouverture vertical, suivant un plan axial vertical de l'aéronef 12 égal à A1 et un angle d'ouverture horizontal égal à A2 suivant un plan axial horizontal de l'aéronef 12 dans un repère lié à l'aéronef 12.

L'angle d'ouverture A1 est défini en excluant les régions du terrain 16 non visibles par le pilote du fait de la structure du cockpit et de l'assiette longitudinale de l'aéronef 12.

L'ensemble 38 de génération d'un environnement synthétique est raccordé au système de positionnement 30 et à l'ensemble de gestion 42. Il comporte une mémoire et un processeur.

Il comporte au moins une base de données 45A contenue dans la mémoire comprenant des données topographiques associées au terrain au dessus et à l'avant duquel évolue l'aéronef 12.

Il comporte en outre un module 45B de génération de lignes de terrain, propre à engendrer dynamiquement des lignes synthétiques représentatives du terrain situé en regard et à l'avant de l'aéronef, sur la base de la position géographique courante de l'aéronef 12, et de son attitude (notamment cap, assiette longitudinale, angle de roulis, lacet), telles que déterminées à l'aide du système de positionnement 30 et sur la base des données topographiques issues d'au moins une des bases de données 45A.

A cet effet, l'ensemble de génération 38 comporte avantageusement une ou plusieurs bases de données 45A choisies parmi des bases de données de terrain, d'obstacles, des bases de données de navigation, des bases de données géopolitiques, des bases de données d'utilisation d'espace aérien, des bases de données de type de terrain (étendues et cours d'eau, zones terrestres etc.)

Le module 45B est ainsi propre à engendrer, à chaque instant donné, une pluralité de lignes qui correspondent à des éléments discrets de l'environnement qui pourrait être observé par le pilote à travers le pare-brise à cet instant donné, lorsque l'aéronef occupe une position géographique et une attitude donnée.

Les lignes synthétiques sont propres à être placées dans le volume d'observation 44A défini par les dimensions de l'afficheur 36.

En référence à la figure 5, les lignes synthétiques représentent en particulier des lignes de relief d'éléments saillants 44B du terrain présent à l'avant de l'aéronef.

Les lignes synthétiques peuvent aussi représenter avantageusement des données aéronautiques comme des aéroports et leurs pistes d'atterrissage ou/et des repères géographiques tels que des villes, des étendues d'eau (rivières, lacs, mers).

A cet effet, l'ensemble de génération 38 comporte des premiers moyens 300 de calcul de la position topographique des lignes de relief, à partir des bases de données 45A et des deuxièmes moyens de calcul 302 de la position affichée des lignes de relief 304 sur l'afficheur 36 pour correspondre à une vision qu'aurait le pilote à partir du cockpit 14.

Les premiers moyens de calcul 300 comprennent des moyens d'analyse des bases de données 45A pour déterminer, en fonction de la position donnée de l'aéronef 12 déterminée à chaque instant par le système de positionnement 30, la position topographique des lignes de relief significatives sur le terrain 16 en regard de l'aéronef dans le volume d'observation 44A.

Ces lignes de terrains significatives sont par exemple choisies parmi les lignes de crête 44C, avantageusement les portions supérieures des lignes de crêtes 44C.

Une ligne de crête 44C est définie par exemple comme une ligne de points hauts d'un relief séparant deux versants opposés du relief.

Les lignes de points hauts peuvent être déterminées à partir de la topographie du terrain définie dans les bases de données 45A par des algorithmes connus.

De préférence, les premiers moyens de calcul 300 comprennent des moyens de sélection d'une partie des lignes de crêtes 44C calculées pour former les lignes de relief. Par exemple, seules les lignes de crêtes 44C dimensionnantes sont sélectionnées par les moyens de calcul 300. Ces lignes de crêtes dimensionnantes sont par exemple les sommets les plus proches et les plus hauts du champ de vision du pilote.

Un exemple de mise en oeuvre de la détermination de lignes de crêtes dimensionnantes consiste à effectuer une classification surfacique du terrain en catégories (par exemple : puits, canaux, cols, crêtes, pics, et régions planes), puis à squelétiser le relief pour passer de surfaces pleines à des contours.

Les crêtes sont ensuite filtrées pour ne conserver que les segments les plus continus possibles. Le modèle de terrain ainsi obtenu est projeté dans le repère pilote en conservant uniquement les crêtes présentes dans le volume d'observation 44A.

Un exemple de méthode est décrit dans le document suivant « The Geomorphological Characterization of Digital Elevation Models », PhD Thesis, University Of Leicester, UK, 1996, par Jo WOOD et est mis en oeuvre dans le logiciel « LandSerf ».

L'étendue et la position de chaque ligne de relief 304 est par exemple élaborée à partir de la position calculée d'une ligne de crête 44C, en utilisant partiellement ou totalement cette position, par exemple en utilisant la portion supérieure de la ligne de crête 44C déterminée à partir de son sommet.

Les lignes de relief 304 sont par exemple choisies au moins partiellement disjointes. Elle présentent chacune une première extrémité et une deuxième extrémité située à l'écart de la première extrémité.

Les deuxièmes moyens de calculs 302 sont propres à déterminer, à partir des données topographiques des lignes topographiques de reliefs déterminées par les premiers moyens de calcul 300, la position sur l'afficheur 36 des lignes de relief 304 destinées à être affichées sur cet afficheur 36.

Ils sont configurés pour que la largeur des lignes de relief affichées 304 soit avantageusement inférieure à 0,1 fois la longueur de ces lignes de relief 304 affichées, afin de ne pas encombrer la vision offerte au pilote. Ainsi, une représentation filaire des lignes de relief 304 est obtenue.

La largeur et/ou la luminosité de chaque ligne de relief 304 dépend de la distance entre l'aéronef 12 et la ligne de relief 304. Ainsi, les lignes de relief 304 les plus proches de l'aéronef 12 présentent une largeur supérieure à celle des lignes de relief 304 les plus éloignées de l'aéronef 12.

De plus, les deuxièmes moyens de calculs 302 sont configurés pour que la surface totale occupée par les lignes de relief 304 sur l'afficheur 36 soit inférieure à 20 %, de préférence inférieure à 10 % de la surface de l'afficheur 36.

Dans l'exemple représenté sur la figure 1, l'aéronef 10 comporte en outre un ensemble de génération 40 d'images réelles à l'avant de l'aéronef.

Cet ensemble de génération 40 comporte au moins un capteur 50 de mesure optique, tel qu'une caméra 51 et un module 52 de génération d'images réelles raccordé au capteur 50.

En variante, l'ensemble 42 comporte une pluralité de capteurs 50 fonctionnant à des longueurs d'onde différentes.

Le capteur 50 est par exemple une caméra visible ou infrarouge ou une caméra dans le domaine millimétrique qui est montée dans le nez de l'aéronef 12 ou au voisinage du nez.

L'ensemble de génération d'images réelles 40 est calibré pour observer l'espace situé à l'avant de l'aéronef dans un champ de vision correspondant de préférence au volume d'observation 44A. Il est propre à mesurer et à fournir dynamiquement au module 52 des données d'images ponctuelles observées à une résolution donnée dans son champ de vision.

Le module 52 est propre à traiter dynamiquement les données ponctuelles reçues du ou de chaque capteur 50 pour former à chaque instant une image réelle, obtenue à partir des données d'image détectées par le ou chaque capteur 50, pour son affichage sur l'afficheur 36.

L'ensemble 42 de gestion de l'interface comporte par exemple un processeur 54 et un mémoire 56. Il comporte des moyens 58 de gestion d'affichage sur l'afficheur 36.

L'ensemble de gestion de l'affichage 42 est raccordé à l'ensemble de génération 38 et au système de positionnement 20.

Selon l'invention, il est propre à afficher dynamiquement, sur au moins une première région de l'afficheur 36, des lignes de relief 304 représentatives du terrain situé en regard de l'aéronef 12, sans afficher de représentation synthétique surfacique du terrain 16, entre les lignes de relief 304.

En particulier, l'ensemble de gestion 42 est propre à maintenir les zones intermédiaires 306 entre les lignes de relief 304 dépourvues de représentation synthétique surfacique du terrain 16, engendrées à partir d'une base de données topographiques.

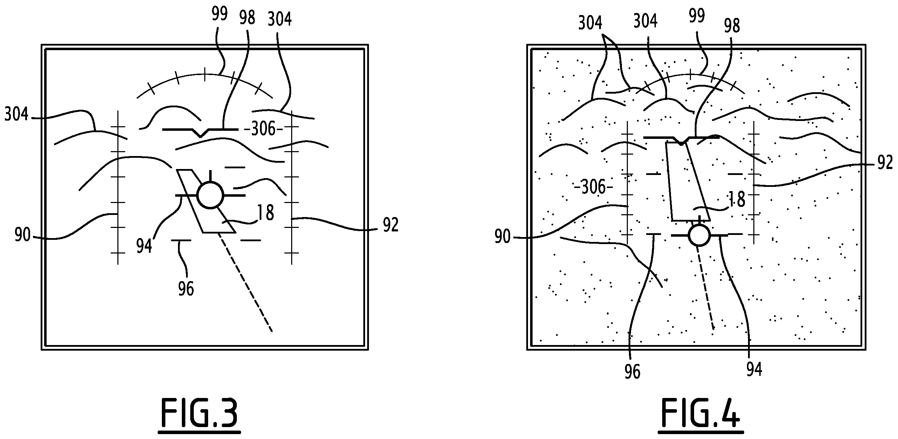

Dans un premier mode de réalisation, illustré par la figure 3, l'ensemble de gestion 42 est propre à maintenir les zones intermédiaires 306 sans image réelle. Le pilote peut alors observer par transparence à travers l'afficheur 36 l'espace situé à l'avant des zones 306.

Dans une variante, représentée sur la figure 4, les moyens de gestion 58 sont propres à afficher dynamiquement une image réelle, obtenue à partir de l'ensemble de génération d'images réelles 40, dans au moins une partie des zones intermédiaires 306, avantageusement dans toutes les zones intermédiaires 306.

Dans ce cas, les zones intermédiaires 306 sont remplies par l'image réelle obtenue au moyen de l'ensemble de génération d'images réelles 40.

Les lignes de relief 304 marquent alors les reliefs présents sur l'image réelle, pour permettre une observation améliorée de ces reliefs.

De préférence, les lignes de relief 304 sont alors affichées en superposition sur l'image réelle.

Avantageusement, l'ensemble de gestion 42 comporte en outre des moyens 72 de commande d'affichage de symboles représentatifs de paramètres de vol, en superposition sur l'afficheur 36.

Les moyens de commande 72 sont par exemple propres à afficher des informations alphanumériques, des informations analogiques comme des échelles ou/et des commandes à actionner par l'utilisateur.

Ces symboles sont par exemple représentatifs d'au moins un des paramètres suivants : indicateur d'altitude, indicateur de situation horizontale, vitesse air, altitude, vitesse verticale, vitesse air corrigée, information moteur, conformation de sustentation de l'aéronef, etc.

Dans l'exemple représenté sur la figure 3, les moyens de commande 72 sont propres à afficher sur l'afficheur 36, indépendamment du positionnement des lignes 304, une échelle de vitesse 90, une échelle d'altitude 92, un symbole 94 ou maquette représentatif de la position de l'aéronef 12 et de son assiette longitudinale, une échelle 96 d'assiette longitudinale, un indicateur d'assiette longitudinale nulle 98, et un indicateur de cap 99.

L'interface homme/machine 44 comporte un organe 102 de réglage de la luminosité de l'affichage des lignes de relief 304 et éventuellement, de la luminosité de l'image réelle affichée sur l'afficheur 36.

L'organe de réglage 102 est propre à régler l'opacité des lignes 304 et/ou de l'image réelle affichée sur l'afficheur. Cette commande est par exemple un bouton ou une molette présente sur la planche de bord du cockpit 14 ou monté sur l'organe de commande de vol 28, servant à manoeuvrer l'aéronef 12.

Un premier procédé de visualisation selon l'invention va maintenant être décrit, en regard des figures 1 à 4.

Initialement, lorsque le système 10 est activé, les dimensions de l'afficheur 36 correspondent au volume d'observation 44A dans l'espace situé à l'avant de l'aéronef 12, défini précédemment.

A chaque instant T de mise a jour du de l'affichage du système 10, par exemple à une fréquence supérieure à 5 Hz et comprise entre 5 Hz et 60 Hz, l'ensemble de génération 38 détermine la position des lignes de relief 304 sur l'afficheur 36 en fonction de la position courante de l'aéronef 12.

A cet effet, les premiers moyens de calcul 300 relèvent la position actuelle de l'aéronef 12 à partir du système de positionnement 30. Ils déterminent, à partir des données topographiques présentes dans les bases de données 45A, les données topographiques du terrain 16 situé dans le volume d'observation 44A situé à l'avant de l'aéronef 12 et destiné à être représenté sur l'afficheur 36.

Puis, dans ce volume d'observation 44A, les moyens de calcul 300 déterminent les lignes de relief topographiques pertinentes destinées à être affichées sous forme de lignes de relief 304 sur l'écran.

Les moyens de calcul 300 déterminent par exemple les lignes de crête 44C séparant les versants opposés de chaque relief 44B présent sur le terrain 16.

Puis, les moyens de calcul 300 déterminent les lignes topographiques de relief en sélectionnant les lignes de crêtes dimensionnantes, puis en extrayant, à partir des lignes de crête calculées, la position d'au moins une partie supérieure de ces lignes de crête 44C, ou en recalculant les lignes de relief à partir des lignes de crête 44C.

Ensuite, les deuxièmes moyens de calcul 302 convertissent la position topographique des lignes de reliefs choisies sur le terrain 16 en une position de ligne de relief 304 sur l'afficheur 36, correspondant à une représentation visuelle du terrain 16 qui pourrait être observée par le pilote à travers le pare-brise du cockpit 14.

Comme on l'a vu plus haut, les moyens de calcul 302 sont configurés pour que la largeur de chaque ligne de relief 304 sur l'afficheur 36 soit inférieure à sa longueur, et soit notamment inférieure à 0,1 fois sa longueur.

De même, les moyens de calcul 302 sont configurés pour que les lignes de relief 304 occupent moins de 20 %, de préférence moins de 10 %, de la région d'affichage de l'afficheur 36.

L'ensemble de gestion 42 affiche alors à chaque instant les lignes de reliefs 304 sur l'afficheur 36.

Dans un premier mode de réalisation, l'ensemble de gestion 42 maintient les zones intermédiaires 306 situées entre les lignes de relief 304 dépourvues de représentation synthétique surfacique du terrain ou d'image réelle. Aucun remplissage synthétique surfacique, représentatif d'un terrain ou d'un paysage, n'est ainsi présent entre les lignes de relief 304.

Le terrain 16 présent à l'avant de l'aéronef est ainsi ébauché uniquement de manière discrète, par l'intermédiaire de lignes 304 individuelles séparées par des zones intermédiaires 306 dépourvues de représentation synthétique surfacique du terrain.

Lorsque l'afficheur 36 est un afficheur tête haute au moins en partie transparent, le pilote est ainsi apte à observer par transparence, à travers l'afficheur 36, l'environnement situé à l'avant de l'afficheur 36, entre les lignes de relief 304.

Dans le cas où la visibilité à l'avant de l'aéronef 12 est imparfaite, voire faible, les lignes de relief 304 ainsi affichées sur l'afficheur 36 soulignent la présence de relief et offrent donc un repérage amélioré pour le pilote, qui peut anticiper certains éléments de relief.

Simultanément, les moyens 72 de commande d'affichage de symboles représentatifs des paramètres de vol affichent ces paramètres de vol en superposition avec les lignes de relief affichées par les moyens de gestion 58.

Dans un deuxième mode de réalisation, représenté sur la figure 4, l'ensemble de gestion 42 affiche, simultanément avec les lignes de relief 304, une image réelle obtenue à partir de données d'images reçues de l'ensemble de génération d'images réelles 40. L'image réelle apparaît donc dans les zones intermédiaires 306 entre les lignes de relief 304.

Avantageusement, les lignes de relief 304 se superposent à l'image réelle.

A cet effet, l'ensemble de génération d'images réelles 40 prend à chaque instant T, des données d'images à l'avant de l'aéronef 12, représentatives de l'environnement situé à l'avant de cet aéronef 12.

Puis, ces données d'images sont transférées au module 52 pour être transformées en une image réelle. L'ensemble de gestion 42 affiche alors une image réelle obtenue dans au moins une partie des zones intermédiaires 306, qui apparait visible entre les lignes de relief 304.

Les lignes de relief 304 ainsi ajoutées à l'image réelle soulignent les éléments de relief présents sur l'image réelle, pour aider le pilote à interpréter des données présentes sur l'image réelle. Ainsi, l'image réelle fournie par l'ensemble 40 est enrichie par la présence des lignes de relief 304 affichées simultanément.

La présence de ces lignes 304 fournit donc un enrichissement mutuel des images, sans perte d'informations pour le pilote, puisque les détails présents sur l'image réelle sont totalement observables.

Dans les exemples représentés sur les figures 3 et 4, la première région occupe tout l'afficheur 36. En variante, la première région d'affichage des lignes de relief 304 occupe seulement une partie de l'afficheur 36, une autre région de l'afficheur étant occupée par une image synthétique comprenant au moins une représentation surfacique synthétique du terrain 16.

## Revendications

1. Système (10) de visualisation pour aéronef (12), comprenant :
- un afficheur (36) ;
- un ensemble (38) de génération d'un environnement synthétique, l'ensemble de génération (38) comportant une base de données (45B), contenant au moins des informations topographiques relatives au terrain (16) situé en regard de l'aéronef (12) ;
- un ensemble (42) de gestion de l'affichage, sur l'afficheur, propre à afficher dynamiquement des informations synthétiques provenant de l'ensemble de génération (38) sur l'afficheur (36), l'ensemble de gestion (42) étant propre à commander l'affichage sur au moins une première région de l'afficheur, de lignes de relief (304) représentatives du terrain (16) situé en regard de l'aéronef, sans afficher de représentation surfacique synthétique du terrain (16) dans les zones intermédiaires (306) situées entre les lignes de relief (304) dans la première région de l'afficheur,
l'ensemble de génération (38) comportant des moyens de détermination de la position des lignes de crête (44C) du terrain (16) à partir de données topographiques présentes dans au moins une base de données (45A), et des moyens de calcul (300) de la position des lignes de relief à partir de la position des lignes de crête (44C) du terrain (16), et en fonction de la position de l'aéronef (12), la largeur et/ou la luminosité de chaque ligne de relief (304) dépendant de la distance entre l'aéronef (12) et la ligne de relief (304),
dans lequel
- soit l'ensemble de génération (42) est propre à maintenir les zones intermédiaires (306) entre les lignes de relief (304) affichées sans image synthétique ou réelle, l'afficheur (36) étant au moins en partie transparent, le terrain (16) en regard de l'aéronef (12) étant observable à travers l'afficheur (36) dans les zones intermédiaires (306)
- soit le système (10) comporte un ensemble (40) de génération d'images réelles du terrain situé en regard de l'aéronef (12), comprenant au moins un capteur de détection (50), l'ensemble de gestion (42) étant propre à commander l'affichage, au moins dans les zones intermédiaires (306) entre les lignes de relief (304), d'une image réelle du terrain (16) situé en regard de l'aéronef (12), simultanément avec l'affichage des lignes de relief (304)..

2. Système (10) selon la revendication 1, **caractérisé en ce que** l'ensemble de génération (38) est configuré pour que la largeur de chaque ligne de relief (304) affichée sur l'afficheur (36) soit inférieure à la longueur de la ligne de relief (304), avantageusement inférieure à 0,1 fois la longueur de la ligne de relief (304).

3. Système (10) selon l'une des revendications 1 ou 2, **caractérisé en ce que** l'ensemble de génération (38) est configuré pour que la surface totale occupée par les lignes de relief (304) sur l'afficheur (36) soit inférieure à 20 %, de préférence inférieure à 10 % de la surface de l'afficheur (36).

4. Système (10) selon l'une quelconque des revendications précédentes, **caractérisé en ce que** les moyens de calcul (300) comportent des moyens de sélection d'une partie des lignes de crête (44C) parmi toutes les lignes de crête (44C) déterminées, les moyens de calcul (300) étant propres à déterminer la position des lignes de relief (304) à partir des lignes de crête (44C) sélectionnées par les moyens de sélection.

5. Système (10) selon l'une quelconque des revendications précédentes, **caractérisé en ce que** les lignes de relief (304) affichées par l'ensemble de gestion (42) sont disjointes.

6. -Système (10) selon l'une quelconque des revendications précédentes, **caractérisé en ce que** l'afficheur (36) est un afficheur au moins partiellement transparent (26), tel qu'un écran semi-transparent placé devant un pare-brise du cockpit, un système de projection d'images sur le pare-brise du cockpit, un pare-soleil semi-transparent, un viseur de casque ou une lunette semi-transparente proche de l'oeil.

7. Système (10) selon la revendication 6, **caractérisé en ce qu'**il comporte un organe de réglage de l'opacité de l'afficheur (26), avantageusement situé sur une manette de commande de l'aéronef, tels que le manche ou la manette des gaz.

8. Système (10) selon l'une quelconque des revendications 1 à 5, **caractérisé en ce que** l'afficheur (36) forme un écran tête basse (24A à 24D).

9. -Procédé de visualisation pour aéronef (12), comprenant les étapes suivantes :
- fourniture d'un système (10) selon l'une quelconque des revendications précédentes ;
- définition dynamique, à partir de la base de données (45A) de l'ensemble de génération (38), de lignes de relief (304) représentatives du terrain (16) situé en regard de l'aéronef (12) ;
- affichage dynamique, par l'ensemble de gestion (42), sur au moins une première région de l'afficheur (36), des lignes de relief (304) sans afficher de représentation surfacique synthétique du terrain dans les zones intermédiaires (306) situées entre les lignes de relief (304) dans la première région, la largeur et/ou la luminosité de chaque ligne de relief (304) dépendant de la distance entre l'aéronef (12) et la ligne de relief (304),
dans lequel
- soit l'ensemble de gestion (42) est propre à maintenir les zones intermédiaires (306) entre les lignes de relief (304) sans image synthétique ou réelle, l'afficheur (36) étant au moins en partie transparent, le terrain (16) en regard de l'aéronef (12) étant observable à travers l'afficheur (16) dans les zones intermédiaires (306),
- soit le procédé comporte une étape de prise de données d'images réelles du terrain (16) situé en regard de l'aéronef (12) par un ensemble de génération d'images réelles (40), puis une étape de génération dynamique d'une image réelle du terrain (16) à partir des données d'image prises par l'ensemble de génération d'images réelles (40), le procédé comportant l'affichage, par l'ensemble de gestion (42), d'une image réelle obtenue à partir de l'ensemble de génération d'images réelles (40) au moins dans les zones intermédiaires (306) entre les lignes de relief (304).

## Patentansprüche

1. Anzeigesystem (10) für ein Luftfahrzeug (12), umfassend:
- ein Anzeigegerät (36);
- ein Aggregat (38) zur Erzeugung einer Simulation, umfassend eine Datenbank (45B), die mindestens topographische Daten über das Gelände (16) in der Umgebung des Luftfahrzeugs (12) enthält;
- eine Anzeigeverwaltungseinheit (42) am Anzeigegerät, die zur dynamischen Anzeige der simulierten Daten aus dem Aggregat (38) auf dem Anzeigegerät (36) geeignet ist,
wobei die Verwaltungseinheit (42) zur Steuerung der Anzeige von Relieflinien (304), die für das Gelände (16) in der Umgebung des Luftfahrzeugs auf mindestens einem Teilbereich des Anzeigegeräts geeignet ist, ohne Oberflächendarstellungen des Geländes (16) in den zwischen den Relieflinien (304) liegenden Bereichen (306) im ersten Teilbereich des Anzeigegeräts anzuzeigen;
wobei das Aggregat (38) Mittel zur Bestimmung der Lage der Kammlinien (44C) des Geländes (16) anhand von topographischen Daten, die in mindestens einer Datenbank (45A) enthalten sind, sowie Mittel (300) zur Berechnung der Lage der Relieflinien anhand der Lage der Kammlinien (44C) des Geländes (16) und als Funktion der Lage des Luftfahrzeugs (12), wobei die Breite und/oder Helligkeit jeder Relieflinie (304) von der Entfernung zwischen dem Luftfahrzeug (12) und der Relieflinie (304) abhängt,
wobei:
- entweder die Einheit (42) dazu geeignet ist, die Anzeige der Bereiche (306) zwischen den Relieflinien (304) ohne simuliertes oder echtes Bild aufrecht zu erhalten, wobei das Anzeigegerät (36) mindestens teilweise transparent ist, wobei das Gelände (16) in der Umgebung des Luftfahrzeugs über das Anzeugegerät (36) in den dazwischen liegenden Bereichen (306) sichtbar ist,
- oder das System (10) eine Einheit (40) zur Anzeige reeller Bilder des Geländes in der Umgebung des Luftfahrzeugs (12) umfasst, die mindestens einen Sensor (50) umfasst, wobei die Verwaltungseinheit (42) dazu geeignet ist, die Anzeige eines reellen Bildes des Geländes (16) in der Umgebung des Luftfahrzeugs (12) mindestens in den Bereichen (306) zwischen den Relieflinien (304) gleichzeitig mit der Anzeige der Relieflinien (304) zu steuern.

2. System (10) nach Anspruch 1, **dadurch gekennzeichnet, dass** das Aggregat (38) derart konfiguriert ist, dass die Breite jeder auf dem Anzeigegerät (36) angezeigten Relieflinie (304) die Länge der Relieflinie (304) unterschreitet, und zwar vorteilhafterweise weniger als 0,1 Mal die Länge der Relieflinie (304).

3. System (10) nach Anspruch 1 oder 2, **dadurch gekennzeichnet, dass** das Aggregat (38) derart konfiguriert ist, dass die von den Relieflinien (304) auf dem Anzeigegerät (36) insgesamt eingenommene Fläche 20 %, vorzugsweise 10 %, der Oberfläche des Anzeigegeräts (36) unterschreitet.

4. System (10) nach einem der vorstehenden Ansprüche,
**dadurch gekennzeichnet, dass** die Rechenmittel (300) Mittel zur Auswahl eines Teils der Kammlinien (44C) aus allen bestimmten Kammlinien (44C) umfassen, wobei die Rechenmittel (300) dazu geeignet sind, die Lage der Relieflinien (304) anhand der von den Auswahlmitteln ausgewählten Kammlinien (44C) zu bestimmen.

5. System (10) nach einem der vorstehenden Ansprüche, **dadurch gekennzeichnet, dass** die von der Verwaltungseinheit (42) angezeigten Relieflinien (304) getrennt sind.

6. System (10) nach einem der vorstehenden Ansprüche, **dadurch gekennzeichnet, dass** das Anzeigegerät (36) mindestens teilweise transparent (26) ist, so z.B. ein halbtransparenter Bildschirm vor einer Windschutzscheibe des Cockpits, eine halbtransparente Sonnenblende, ein Helmvisier oder eine halbtransparente Brille in Augennähe.

7. System (10) nach Anspruch 6,
**dadurch gekennzeichnet, dass** es ein Element zur Steuerung der Opazität des Anzeigegeräts (26) umfasst, das vorteilhafterweise an einem Steuerhebel des Luftfahrzeugs, z.B. am Schwenk- oder Gashebel, angeordnet ist.

8. System (10) nach einem der Ansprüche 1 - 5, **dadurch gekennzeichnet, dass** das Anzeigegerät (36) einen "Kopf unten"-Bildschirm (24A - 24D) bildet.

9. Anzeigeverfahren für ein Luftfahrzeug (12), umfassend die Schritte:
- Vorsehen eines Systems (10) nach einem der vorstehenden Ansprüche,
- dynamisches Definieren von Relieflinien (304), die das Gelände (16) in der Umgebung des Luftfahrzeugs (12) darstellen, anhand der Datenbank (45A) des Aggregats (38);
- dynamisches Anzeigen von Relieflinien (304) durch die Verwaltungseinheit (42) auf mindestens einem ersten Teilbereich des Anzeigegeräts (36), ohne simulierte Oberflächendarstellungen des Geländes in den Bereichen (306) zwischen den Relieflinien (304) im ersten Teilbereich anzuzeigen, wobei die Breite und/oder Helligkeit jeder Relieflinie (304) von der Entfernung zwischen dem Luftfahrzeug (12) und der Relieflinie (304) abhängt,
wobei entweder
die Verwaltungseinheit (42) dazu geeignet ist, die Anzeige der Bereiche (306) zwischen den Relieflinien (304) ohne simuliertes oder echtes Bild aufrecht zu erhalten, wobei das Anzeigegerät (36) mindestens teilweise transparent ist, wobei das Gelände (16) in der Umgebung des Luftfahrzeugs (12) über das Anzeugegerät (16) in den dazwischen liegenden Bereichen (306) sichtbar ist,
- oder das Verfahren umfasst: einen Schritt des Erfassens von reellen Bilddaten des Geländes (16) in der Umgebung des Luftfahrzeugs (12) durch eine Einheit (40) zur Erzeugung reeller Bilder, gefolgt durch einen Schritt des dynamischen Erzeugens eines reellen Bildes des Geländes (16) anhand der von der Einheit (40) erfassten Bilddaten, wobei das Verfahren umfasst: Anzeigen eines reellen Bildes aus der Einheit (40) durch die Verwaltungseinheit (42) mindestens in den Bereichen (306) zwischen den Relieflinien (304).

## Claims

1. A vision system (10) for an aircraft (12), comprising:
- a display (36);
- an assembly (38) for generating a synthetic environment, the generating assembly (38) including a database (45B), containing at least topographical information relative to the terrain (16) situated facing the aircraft (12);
- a display management system (42), on the display, capable of dynamically displaying synthetic information coming from the generating assembly (38) on the display (36),
the management assembly (42) being capable of commanding the display, on at least one first region of the display, of relief lines (304) representative of the terrain (16) situated facing the aircraft, without displaying synthetic surface representations of the terrain (16) in the intermediate areas (306) situated between the relief lines (304) of the first region of the display,
the generating assembly (38) comprising means for determining the position of the crest lines (44C) of the terrain (16) from topographical data present in at least one database (45A), and means (300) for computing the position of the relief lines from the position of the crest lines (44C) of the terrain (16), and based on the position of the aircraft (12), the width and/or brightness of each relief line (304) depending on the distance between the aircraft (12) and the relief line (304),
in which
- either the management assembly (42) is capable of keeping the intermediate areas (306) between the relief lines (304) displayed without synthetic or real image, the display (36) being at least partially transparent, the terrain (16) facing the aircraft (12) being observable through the display (36) in the intermediate areas (306)
- or the system (10) includes an assembly (40) for generating real images of the terrain facing the aircraft (12), comprising at least one detection sensor (50), the management assembly (42) being capable of managing the display, at least in the intermediate areas (306) between the relief lines (304), of a real image of the terrain (16) situated facing the aircraft (12), simultaneously with the display of the relief lines (304).

2. The system (10) according to claim 1, **characterized in that** the generating assembly (38) is configured so that the width of each relief line (304) displayed on the display (36) is smaller than the length of the relief line (304), advantageously smaller than 0.1 times the length of the relief line (304).

3. The system (10) according to one of claims 1 or 2, **characterized in that** the generating assembly (38) is configured so that the total surface area occupied by the relief lines (304) on the display (36) is less than 20%, preferably less than 10% of the surface of the display (36).

4. The system (10) according to one of the preceding claims, **characterized in that** the computation means (300) include means for selecting part of the crest lines (44C) from among all of the determined crest lines (44C), the computation means (300) being capable of determining the position of the relief lines (304) from the crest lines (44C) selected by the selecting means.

5. The system (10) according to one of the preceding claims, **characterized in that** the relief lines (304) displayed by the management assembly (42) are disjointed.

6. The system (10) according to one of the preceding claims **characterized in that** the display (36) is an at least partially transparent display (26), such as a semitransparent screen placed in front of the windshield of the cockpit, a system for projecting images on the windshield of the cockpit, a semitransparent sunshade, a helmet visor or semitransparent glasses close to the eye.

7. The system (10) according to claim 6, **characterized in that** it includes a member for adjusting the opaqueness of the display (26), advantageously situated on a control lever of the aircraft, such as the control stick or the throttle.

8. The system (10) according to one of claims 1 to 5, **characterized in that** the display (36) forms a head-down screen (24A to 24D).

9. A viewing method for an aircraft (12), comprising the following steps:
- providing a system (10) according to any one of the preceding claims;
- dynamically defining, from the database (45A) of the generating assembly (38), relief lines (304) representative of the terrain (16) situated facing the aircraft (12);
- dynamically displaying, using the management assembly (42), relief lines (304) on at least one first region of the display (36) without displaying a synthetic surface representation of the terrain in the intermediate areas (306) situated between the relief lines (304) in the first region, the width and/or brightness of each relief line (304) depending on the distance between the aircraft (12) and the relief line (304),
in which
- either the management assembly (42) is capable of maintaining the intermediate areas (306) between the relief lines (304) without a synthetic or real image, the display (36) being at least partially transparent, the terrain (16) facing the aircraft (12) being observable through the display (16) in the intermediate areas (306),
- or the method includes a step for acquiring real image data of the terrain (16) situated facing the aircraft (12) by a real image generating assembly (40), then a step for dynamically generating a real image of the terrain (16) from the image data taken by the real image generating assembly (40), the method including the display, by the management assembly (42), of a real image obtained from the real image generating assembly (40) at least in the intermediate areas (306) between the relief lines (304).
